# EUROPEAN PATENT SPECIFICATION

(11) **EP 2 535 220 B1**
(45) Date of publication and mention of the grant of the patent: **18.12.2019**
(21) Application number: 11170087.8
(22) Date of filing: 16.06.2011
(51) Int. Cl.: B60L 9/00, H02M 7/757

(54) **Method for controlling a drive unit of a vehicle, a drive unit and an electrical train**
Verfahren zum Steuern einer Antriebseinheit eines Fahrzeugs, Antriebseinheit und elektrischer Antriebsstrang
Procédé pour le contrôle d'une unité de transmission de véhicule, unité de transmission et conduite électrique

(43) Date of publication of application: 19.12.2012
(73) Proprietor: Bombardier Transportation GmbH, 10785 Berlin (DE)
(72) Inventor: Eisele, Andreas, 79787 Lauchringen (DE); Kindell, Bo, 722 23 Västerås (SE); Galic, Johann, 735 31 Surahammar (SE); Bergman, Magnus, 72241 Västerås (SE); Öhrn, Kenth, 72591 Västerås (SE)
(74) Representative: Bjerkéns Patentbyrå KB (Gävle)

(56) References cited:
- EP-A1- 1 253 059
- EP-B1- 0 199 315
- JP-A- 2007 189 762
- JP-A- 2010 130 788

## Description

### FIELD OF THE INVENTION

The present invention relates to a method for controlling a drive unit of a vehicle, preferably a rail bound vehicle such as an electric train, connected to an AC-supply line. The drive unit comprises an AC/DC-converter converting electric power to a target value between the AC-supply line and at least one electric motor of the vehicle, and a DC-link transferring electric power between the AC/DC-converter and the electric motor. The method comprises measuring a physical quantity of at least the AC-supply line and controlling the AC/DC-converter by executing at least one regulating function based on the measured physical quantity.

The present invention also relates to a drive unit for a vehicle and electric train comprising the drive unit. The drive unit is adapted to be connected to an AC-supply line and a train comprising the drive unit. The drive unit comprises an AC/DC-converter converting electric power to a target value between the AC-supply line and at least one electric motor of the vehicle, a DC-link transferring electric power between the AC/DC-converter and the electric motor, and a control unit comprising at least one regulating function. The control unit is adapted to receive information on a physical quantity of at least the AC-supply line and control the AC/DC-converter by executing the regulating function on basis of said information on the physical quantity.

### PRIOR ART

One or more drive units are used in vehicles, such as an electric train, in order to supply the electric motors of the vehicle with electric power from the AC-supply line. When the vehicle is in a regenerative mode the electric motors generates electric power that the drive unit feeds back to the AC-supply line.

The drive unit comprises the AC/DC-converter, such as a four quadrant line circuit converter (4QC), that converts AC power from the AC-supply line to DC power by means of one or more switching arrangements comprising a plurality of remotely controlled electric switches. The switching arrangement preferably comprises insulated gate bipolar transistors (IGBT) or similar switches.

The control unit controls the switching operation of the switches of the AC/DC-converter in order to convert electric power to the target value between the AC-supply line and the electric motor of the vehicle. The control unit receives information on measurements of the physical quantity of at least the AC-supply line, such as a voltage and a current of the AC-supply line. The control unit comprises one or more regulating function that is executed and on bases of the measured physical quantity results in control signals to the switching arrangement of the AC/DC-converter.

The above described drive unit provides a reliable and efficient drive unit for providing electric power between the AC-supply line and the one or more electric motors of the vehicle. However, in the situation when several vehicles operates in the same area, the operation of the drive unit of the vehicles can result in instability of the AC-supply line and thereto connected components, such as feeder station, drive unit of the vehicles, etcetera. The instability may have the result that the operation of the feeder station, the drive unit of the vehicle, or other components must be reduced or interrupted.

The instability generally relates to power oscillations at low frequency in relation to fundamental frequency of the AC-supply line. A typical frequency of the power oscillations is about 5 Hz, which is considerably lower than the fundamental frequency of the AC-supply line that in most cases has a frequency of 16,7 or 50 Hz.

The instability problem most usually occurs when many vehicles are parked at a depot and the one or more drive units of the vehicles are in operation. Due to the instability problem the numbers of vehicles in the same area of the AC-supply line must be limited so that detrimental power oscillations for the operation of the components connected to the AC-supply line do not arises.

JP 2010130788 A discloses a power conversion apparatus for suppressing power oscillations.

EP 0199315 B1 discloses a control system for an electric loco motive. The control system comprises means for suppressing power oscillations.

### OBJECTS AND SUMMARY OF THE INVENTION

An object of the present invention is to provide a method for controlling a drive unit of a vehicle in order to reduce the contribution of the drive unit to power oscillations in the AC-supply line while allowing the drive unit of the vehicle to be connected to the AC-supply line. A further object of the invention is a method for controlling a drive unit of a vehicle in order to assure that power oscillations do not exceed certain value on the AC-supply line.

This object is achieved by a method according to claim 1. The method is characterized in that the regulating function comprises a high regulating level converting electric power to the target value with a first accuracy and a low regulating level converting electric power to the target value with a second accuracy, the first accuracy being higher than the second accuracy, wherein the method further comprises:
- receiving information on whether the vehicle is in an operational or a non-operational mode,
- setting the regulating function to the high regulating level if the vehicle is in the operational mode,
- setting the regulating function to the low regulating level if the vehicle is in the non-operational mode, and
- executing the regulating function based on the measured physical quantity and the set regulating level.

The at least one regulating function regulates the control of the AC/DC-converter in order to convert electric power to the target value. The regulating function is executed on basis of information on measurements of the physical quantity, such as a voltage and a current of the AC-supply line, etc.

According to the invention, the regulating function comprises a high and a low regulating level. The accuracy of the AC/DC-converter converting electric power to the target value is dependent on if the regulating function is executed with the high or the low regulating level.

The high regulating level comprises a more extensive and detailed regulation on basis of the measured physical quantity in comparison to the low regulating level. The high regulating level provides a higher accuracy of the AC/DC-converter conversion of power to the target value in comparison to the low regulating level.

When the vehicle is in the operational mode, the high regulating level is necessary for providing electric power to or from the at least one electric motor in order to maintain an optimal performance of the operation of the vehicle. However, in the non-operational mode the amount of power fed to the vehicle is small in comparison to the operational mode and the operation of the vehicle in the non-operational mode is possible with reduced requirement on the accuracy of the target value in comparison to the operational mode.

The term "operational mode" refers to a mode of the vehicle in which the vehicle is in motion or ready to be set into motion. The vehicle may be in the operational mode also when the vehicle is in a static state, such as during a stop of short duration at a station. The term "non-operational mode" refers to a mode of the vehicle in which the vehicle is connected to the AC-line but has limited capacity to be maintained in motion or to be set into motion in comparison to the operational mode.

A further difference between the high and the low regulating level is that the drive unit contributes more to the instability of the AC-supply line at the high regulating level in comparison to the low regulating level.

By means of setting the regulating function to the high or the low regulating level in dependency of information on whether the vehicle is in the operational mode or the non-operational mode, the contribution of the vehicle to the power oscillations are reduced. Accordingly, it is possible to have a larger number of vehicles in operation at an area of the AC-supply line without the occurrence of instability to the AC-supply line resulting in reduction or interruption of operation of components connected to the AC-supply line in comparison to prior art.

According to one embodiment of the invention, the regulating function comprises two or more sub-functions of which at least one sub-function comprises an active and a passive state, wherein the regulating level of the regulating function is dependent on the number of active sub-functions in that the high regulating level comprises a larger number of active sub-functions than the low regulating level, wherein the method comprises:
- setting the regulating function to the high regulating level comprising changing at least one of the sub-functions from the passive state to the active state if the vehicle is in the operational mode,
- setting the regulating function to the low regulating level comprising changing at least one of the sub-functions from the active state to the passive state if the vehicle is in the non-operational mode.

The regulating level of the regulating function is dependent of the number of active sub-function. By changing one or more sub-functions between the active and passive state the regulating level is changed between the high and the low regulating level.

According to one embodiment of the invention, the regulating function is a proportional-integral controller comprising a proportional sub-function and integral sub-function, wherein the method further comprises:
- setting the regulating function to the high regulating level comprising changing the integral sub-function from the passive state to the active state if the vehicle is in the operational mode,
- setting the regulating function to the low regulating level comprising changing the integral sub-function from the active state to the passive state if the vehicle is in the non-operational mode.

The proportional sub-function takes in account a present error of the converted electric power to the target value for the control of the AC/DC-converter. The integral sub-function takes into account a past error or errors of the converted electric power to the target value for the control of the AC/DC-converter. The combination of the proportional sub-function and the integral sub-function provides the high regulating level. The use of only the proportional sub-function provides the low regulating level resulting in a lower accuracy of converting electric power to the target value in comparison to the high regulating level.

According to the invention, a control unit comprises a plurality of regulating functions comprising a first group comprising a high regulating level and a second group comprising a high regulating level and low regulating level, wherein the method comprises:
- setting the regulating function of the second group to the high regulating level if the vehicle is in the operational mode,
- setting the regulating function of the second group to the low regulating level if the vehicle is in the non-operational mode.

By allowing only the second group of regulating function to be changed between the high and low regulating level, it is assured that the first group of regulating function is maintained in the high regulating level while allowing the second group to be switched between the high and low regulating level. The first group of regulating function may be necessary for converting electric power to the target value with a minimum required accuracy for the vehicle. Accordingly, it is possible to change the regulating level of a portion of the total number of regulating functions available in order to reduce the contribution of the vehicle to the power oscillations in the in the AC-supply line.

According to one embodiment of the invention, the method further comprises:
- measuring at least one of a voltage and a current of the AC-supply line, a voltage of the DC-link and a current of the AC/DC-converter. The above measuring physical quantities are used in one or more regulating functions when controlling the AC/DC-converter.

According to one embodiment of the invention, the regulating function is predicting at least the fundamental frequency of the voltage of the AC-supply line. The fundamental frequency of the AC-supply line, typically 16,7 or 50 Hz, needs to be identified for controlling the conversion of power to the target value by the AC/DC-converter.

According to one embodiment of the invention, the regulating function is controlling the power flow to and from the AC/DC-converter (7).

According to one embodiment of the invention, the regulating function is synchronizing the target of the conversion of power with a fundamental frequency of the voltage of the AC-supply line. The synchronizing of the target of the conversion with the fundamental frequency enables control of feeding power to and from the electric motor.

According to one embodiment of the invention, the drive unit comprises a transformer unit transforming the voltage from the AC-supply line to the AC/DC-converter, which transformation is dependent on at least one of a fundamental frequency of the voltage of the AC-supply line and a current of AC/DC-converter, wherein the regulating function is regulating the AC/DC-converter based on a model of the transformer unit with at least one of the fundamental frequency of the voltage of the AC-supply line and the current of AC/DC-converter.

According to one embodiment of the invention, the regulating function is regulating the power flow to and from the AC/DC-converter. When the electric motor is accelerating the vehicle the drive unit provides electric power to the electric motor. When the electric motor is regenerative breaking the vehicle the drive unit provides electric power to the AC-supply line.

The model of the transformer unit is taken into account the dependency of the transformer unit with at least fundamental the fundamental frequency of the voltage of the AC-supply line and the current of AC/DC-converter. The model of the transformer unit may involve further dependencies such as with temperature, etcetera.

According to one embodiment of the invention, one or more of mentioned regulating function are executed in parallel for the control of the AC/DC-converter.

According to one embodiment of the invention, the method further comprises:
- determining whether the AC-supply line comprises power oscillations exceeding a certain level, and
- setting the regulating function to a low regulating level if said power oscillations exceeds the certain level.

By means of determining power oscillations exceeding a certain level, a further increase in the power oscillations is avoided by setting the regulating function to a low regulating level when the certain level of the power oscillations has been exceeded. Thereby, the instability problem may be resolved or mitigated before the operation of components connected to the AC-supply line is reduced or interrupted.

According to one embodiment of the invention, the high regulating level of the regulating function of the AC/CD-converter comprises a converter mode providing conversion of electric power with the first accuracy and the low regulating level of the regulating function of the AC/CD-converter comprises a diode rectifier mode providing conversion of electric power with the second accuracy, wherein the method comprises:
- setting the regulating function to the converter mode if the vehicle is in the operational mode,
- setting the regulating function to the diode rectifier mode if the vehicle is in the non-operational mode, and
- executing the regulating function based on the measured physical quantity and the set regulating level.

In the converter mode the AC/DC-converter is regulated for converting electrical power with necessary accuracy for operation of the vehicle. In the diode rectifier mode the AC/DC-converter acts as a pure diode rectifier.

According to one embodiment of the invention, the drive unit comprises an auxiliary converter being provided with electric power from the AC/DC-converter, and the vehicle comprises at least one further drive unit providing power to the electric motor, the further drive unit comprises an operational and a non-operational state, wherein the method further comprises:
- setting the further drive unit to the operational state if the vehicle is in the operational mode, and
- setting the further drive unit to the non-operational state if the vehicle is in the non-operational mode.

The auxiliary converter is providing other components than the electric motor of the vehicle with electric power. By means of setting the further drive unit that is not necessary for the auxiliary converter to the non-operational state, the operation of other components than the electric motor is maintained while the contribution of the vehicle to the power oscillations are reduced. Examples of such other components are illuminators, fans, batteries, air conditions, etcetera.

The object of the invention is further achieved by a drive unit according to claim 12. The drive unit is characterized in that the regulating function comprises a high regulating level converting electric power to the target value with a first accuracy and a low regulating level converting electric power to the target value with a second accuracy, the first accuracy being higher than the second accuracy, wherein the control unit is adapted to receive information on whether the vehicle is in is in an operational or a non-operational mode, and in dependency of the information switch the regulating function between the high and low regulating level so that the regulating function is set to the high regulating level when the vehicle is the operational mode and to the low regulating level when the vehicle is in the non-operational mode.

According to one embodiment of the invention, the AC/DC-converter comprises a switching arrangement of electric switches that is adapted to be controlled by the control unit so that electric power is converted to the target value, wherein the control unit comprises means for generating control signals to the electric switches of the switching arrangement.

By means of control signals to the arrangement of electric switches, the control unit controls the AC/DC-converter so that electric power is converted to the target value with the first or the second accuracy.

According to one embodiment of the invention, the drive unit comprises a measuring unit adapted to measure a physical quantity of at least the AC-supply line and transfer information on the physical quantity to the control unit.

According to one embodiment of the invention, the by the measuring unit measured physical quantity is at least one of a voltage and a current of the AC-supply line, a voltage of the DC-link and a current of the AC/DC-converter.

According to one embodiment of the invention, the control unit is adapted to determine whether the vehicle is in the operational or the non-operational mode on basis of a control member adapted to be controlled by an operator in order to manually switch the vehicle to between the operational and the non-operational mode. The control member is for example an operating handle, an operating lever, a switch, a button, a key device, etcetera. Thereby, it is possible to manually switch the vehicle between the operational and the non-operational mode.

According to one embodiment of the invention, the control unit is adapted to determine whether the vehicle is in the operational or the non-operational mode on basis of information on a thrust of the electric motor, wherein the vehicle is in the operational mode when the thrust is higher than a certain threshold value and the vehicle is in the non-operational mode when the thrust is lower than the certain threshold value. Thereby, it is possible to operate the vehicle below the certain threshold value corresponding to a low speed in comparison to an operation of the vehicle above the certain threshold. The non-operational mode may thus be used for example when transporting the vehicle at a station, vehicle depot, or during similar situations. Accordingly, the non-operational mode may be set so to enable a motion of the vehicle at reduced speed in comparison to the operational mode.

According to one embodiment of the invention, the control unit is adapted to determine whether the vehicle is in the operational or the non-operational mode on basis of information on whether the vehicle is in motion or in stand still or essentially stand still, wherein the vehicle is in the operational mode when the vehicle is in motion and in non-operational mode when the vehicle is in stand still or essentially stand still. The information on the speed of the vehicle is for example provided by a speed sensor. Thereby, the vehicle is automatic switched from the operational mode to the non-operational mode when the vehicle is set to stand still or essentially stand still.

According to one embodiment of the invention, the control unit is adapted to determine whether the vehicle is in the operational or the non-operational mode on basis of information on whether the vehicle is in stand still or essentially stand still and the duration of the stand still, wherein the vehicle is in the operational mode when the vehicle is in stand still less than a certain time period and in non-operational mode when the vehicle is in stand still longer than the certain time period. Thereby, the vehicle is automatic switched from the operational mode to the non-operational mode if a stop exceeds the certain time period.

According to one embodiment of the invention, the vehicle is switched from the non-operational mode to the operational mode by means of a control member adapted to be controlled by an operator. The control member is for example an operating handle, an operating lever, a switch, a button, a key device, etcetera. Thereby, the operator has the possibility to manually switch the vehicle from the non-operational mode to the operational mode.

According to one embodiment of the invention, the control unit comprises a first logic unit adapted to execute the regulating function, wherein the regulating function comprises two or more sub-functions of which at least one sub-function comprises an active and a passive state, wherein the regulating level of the regulating function is dependent on the number of active sub-functions in that the high regulating level comprises a larger number of active sub-functions than the low regulating level, wherein the control unit comprises a second logic unit adapted to switch at least one of the sub-functions between the passive state and the active state in dependency of the information on whether the vehicle is in the operational or the non-operational mode.

The regulating function is set to the high regulating level by means of the second logic unit switching at least one sub-function from the passive state to the active state when the vehicle is in the operational mode by means of the control unit switching the at least one sub-function from the passive state to the active state and from the active state to the passive state when the vehicle is in the non-operational mode by means of the control unit switching the at least one sub-function from the active state to the passive state.

According to one embodiment of the invention, the control unit comprises a plurality of regulating functions comprising a first group comprising a high regulating level and a second group comprising a high regulating level and low regulating level, wherein the second logic unit is adapted to switch the second group of regulating function between the high and low regulating level so that the second group of regulating function are set to the high regulating level when the vehicle is the operational mode and to a low regulating level when the vehicle is in the non-operational mode.

The object of the invention is further achieved by an electric train comprising a drive unit according to any of claim 13 and 14.

### BRIEF DESCRIPTION OF THE DRAWINGS

The invention will now be explained more closely by the description of different embodiments of the invention and with reference to the appended figures.
- Figure 1: shows a drive unit of a vehicle.
- Figure 2: shows an enlargement of an AC/DC-converter of the drive unit in fig. 1.
- Figure 3: shows a vehicle comprising a drive unit and a further drive unit.
- Figure 4: shows a flowchart of a method according to a first embodiment of the invention.
- Figure 5: shows a flowchart of a method according to a second embodiment of the invention.
- Figure 6: shows a flowchart of a method according to a third embodiment of the invention.
- Figure 7: shows a flowchart of a method according to a fourth embodiment of the invention.
- Figure 8: shows a flowchart of a method according to a fifth embodiment of the invention.

### DETAILED DESCRIPTION OF PREFERRED EMBODIMENTS OF THE INVENTION

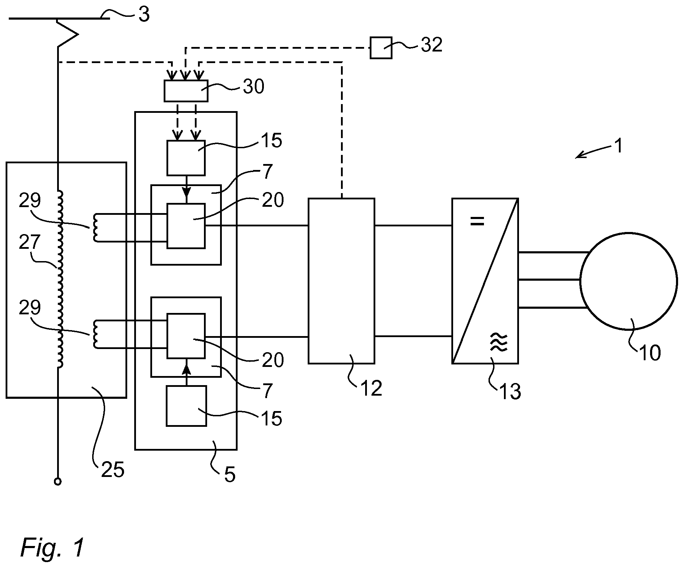

Figure 1 shows a drive unit 1 of a vehicle according to an embodiment of the invention. The drive unit 1 of the vehicle is adapted to be connected to an AC-supply line 3 from which the vehicle is provided with electric power.

The drive unit 1 comprises an AC/DC-converter unit 5 that comprises two AC/DC-converters 7. The AC/DC-converter 7 is adapted to convert electric power to a target value that is to be fed between the AC-supply line 3 and at least one electric motor 10 of the vehicle.

The drive unit 1 further comprises a DC-link 12 and a motor converter 13. The DC-link 12 is adapted to feed electric power through the motor converter 13 between the AC/DC-converter 7 and the electric motor 10. The motor converter 13 is adapted to convert electric power between DC and AC that is to be fed to the electric motor 10 or the AC/DC-converter 7.

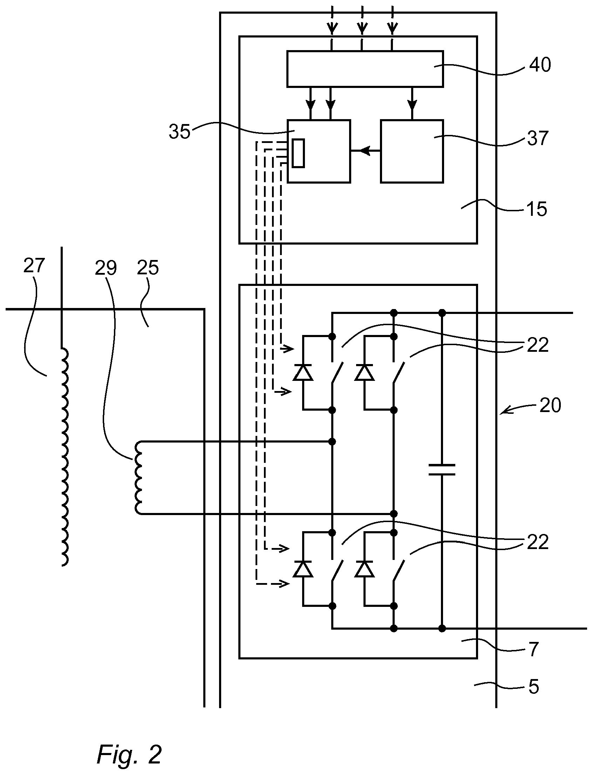

The drive unit 1 further comprises a control unit 15 adapted to control the AC/DC-converter 7 so that electric power is converted to the target value. The AC/DC-converter 7 comprises a switching arrangement 20, see enlargement in figure 2. The switching arrangement 20 comprises four remotely controlled electric switches 22, such as IGBT-switches or similar switches. The switches 22 of the switching arrangement 20 are adapted to be controlled by the control unit 15 in that the control unit 15 comprises means for generating control signals to the switches 22 of switching arrangement 20. Thereby, the switches 22 of switching arrangement 20 open and close in a sequence that results in conversion of electric power to the target value. The control signals are indicated as dotted lines between the control unit 15 and the switching arrangement 20 of the AC/DC-converter 7.

The drive unit 1 further comprises a transformer unit 25 comprising at least one primary coil 27 and at least one secondary coil 29. In fig. 1 the transformer unit 25 comprises one primary coil 27 and two secondary coils 29. The transformer unit 25 is adapted to transform the voltage from the AC-supply line 3 to the AC/DC-converter 7. The switching arrangement 20 of the AC/DC-converter 7 is in connection with the secondary coil 29 of the transformer unit 25 and receives transformed voltage from the transformer unit 25.

The drive unit 1 further comprises a measuring unit 30 adapted to measure a physical quantity of at least the AC-supply line 3 and transfer information on measured values of the physical quantity to the control unit 15. The control unit 15 is adapted to control the AC/DC-converter 7 by executing one or more regulating function on basis of information of the measured physical quantity. The physical quantity is for example one or more of a voltage and a current of the AC-supply line 3, a voltage of the DC-link 12 and a current of the AC/DC-converter 7.

The regulating function of the AC/DC-converter 7 comprises a high regulating level that converts electric power to the target value with a first accuracy and a low regulating level that converts electric power to the target value with a second accuracy. The high regulating level and the low regulating level are arranged so that the first accuracy is higher than the second accuracy.

According to one embodiment of the invention, the control unit 15 is adapted to determine whether the vehicle is in is in the operational or the non-operational mode on basis of position of control member, such as an operating handle, an operating lever, a switch, a button, a key device, etcetera. Thereby, it is possible for an operator to switch the vehicle between the operational and the non-operational mode.

Alternatively, the control unit 15 is adapted to determine whether the vehicle is in is in the operational or the non-operational mode on basis of information on thrust of the electric motor, wherein a value of the thrust higher than a certain threshold value corresponds to the operational mode and a value of the thrust lower than the certain threshold value corresponds to the non-operational mode.

According to yet another alternative, the control unit 15 is adapted to determine whether the vehicle is in the operational or the non-operational mode on basis of information on speed of the vehicle and a duration of a stand still. The control unit is arranged so that the vehicle is in the operational mode when the vehicle is in stand still less than a certain time period and in the non-operational mode when the vehicle is in stand still longer than the certain time period.

Information on speed is, for example, provided by a sensor 32, such as a tachometer, that senses the speed of a vehicle's wheel rotation. According to one embodiment of the invention, when the wheel of the vehicle is in motion the vehicle is in the operational mode and when the wheel of the vehicle is in a stand still or essentially in a stand still longer than the certain time period the vehicle is in the non-operational mode. Information on duration of stand still is provided by a clock unit.

The control unit 15 is adapted to in dependency of information on whether the vehicle is in the operational or non-operational mode switch the regulating function between the high and the low regulating level so that the regulating function is set to the high regulating level when the vehicle is in the operational mode and to the low regulating level when the vehicle is in the non-operational mode. By means of setting the regulating function to the low regulating level the vehicle's contribution to power oscillations on the AC-supply line 3 is reduced.

The control unit 15 comprises a first logic unit 35 adapted to execute the regulating function. The control unit 15 further comprises a second logic unit 37 adapted to set the regulating function to be executed by the first logic unit 35 to the high regulating level or the low regulating level in dependency of information on whether the vehicle is in the operational or the non-operational mode.

The control unit 15 further comprises an A/D-converter 40 that is adapted to receive measured values on the physical quantity and information on whether the vehicle is in the operational mode or the non-operational mode. The A/D-converter 40 converts analogue measured values to digital values and transfers the information on the measured physical quantity to the first logic unit 35, which information is adapted to be used when executing the regulating function with the set regulating level.
The control unit 15 is adapted to control the AC/DC converter 7 by means of one or more regulating functions. Examples of regulating functions are a fundamental frequency function, a power control function, a synchronizing function and a transformer function. Further not mentioned regulating functions may be executed by the control unit 15 in order to control the AC/DC converter 7.

The fundamental frequency function is executed in order to identify the fundamental frequency of the AC-supply line 3 and the periodic variation of the voltage of the AC-supply line 3 in time. The AC/DC-converter 7 is controlled in dependency of the fundamental frequency.

The power control function is executed in order to control the flow of power to and from the AC/DC-converter 7. The power control is controlled in dependency of the electric motor is in accelerating or decelerating.

The synchronizing function is executed in order to synchronize the target of the conversion of power with a fundamental frequency of the voltage of the AC-supply line 3. The synchronizing of the target of the conversion allows the power fed to and from the electric motor 10 to be controlled.

The transformer function is executed in order to take into account the voltage drop over the transformer unit 25. The transformer function uses a model of dependency of the transformer unit 25 with parameters such as temperature, frequency of the voltage of the AC-supply line 3, etcetera.

According to an embodiment of the invention the first logic unit 35 is adapted to execute a regulating function comprising two or more sub-functions of which at least one sub-function comprises an active and a passive state. The regulating level of a regulating function is dependent on the number of active sub-function in that the high regulating level comprises a larger number of active sub-functions than the low regulating level. The second logic unit 37 is adapted to switch at least one of the sub-functions to be executed by the first logic unit 35 between the passive state and the active state independency of the information on whether the vehicle is in the operational or the non-operational mode by transferring a control signal to the first logic unit 35. By means of setting the sub-function of the regulating function to the passive state the vehicle's contribution to power oscillations on the AC-supply line 3 is reduced.

For example, the regulating function comprises a proportional sub-function and integral sub-function, wherein the integral sub-function comprises the active and the passive state. The second logic unit 37 is adapted to set the integral sub-function between the active and the passive state so that the integral sub-function is in the active state when the vehicle is in the operational mode and the integral sub-function is in the passive state when the vehicle is in the non-operational mode. The proportional sub-function is adapted to be active regardless of if the vehicle is in the operational or the non-operational mode.

According to an embodiment of the invention the control unit 15 is adapted to execute a plurality of regulating functions, such two or more of a fundamental frequency function, power control, a synchronizing function and a transformer function. The plurality of functions comprises a first group having only a high regulating level and a second group comprising a high regulating level and a low regulating level. The second logic unit 37 is adapted to switch the second group of regulating function between the high and the low regulating level in dependency of information on whether the vehicle is the operational mode or the non-operational mode. Thereby, it is possible to control the AC/DC-converter 7 by the first group of regulating function in the high regulating level and the second group of regulation function in the low regulating level when the vehicle is in the non-operational mode and the first group and the second group of regulating function in the high regulating level when the vehicle is in the operational mode.

For example, the first group comprises the fundamental frequency function and the second group comprises the transformer function. The second logic unit 37 is adapted to switch the transformer function between the high and the low regulating lever. Thereby, in the operational mode both the fundamental frequency function and the transformer function are in the high regulating level, and in the non-operational mode the fundamental frequency function is in the high regulating level and the transformer function is in the low regulating level.

According to one embodiment of the invention, the AC/DC-converter comprises a converter mode providing conversion of electric power with the first accuracy and a diode rectifier mode providing conversion of electric power with the second accuracy.

The control unit 30 is adapted to receive information on whether the vehicle is in is in the operational or the non-operational mode and in dependency of the information switch the AC/DC-converter 7 between the converter mode and the diode rectifier mode so that the AC/DC-converter 7 is set to the converter mode when the vehicle is the operational mode and to the diode rectifier mode when the vehicle is in the non-operational mode. By means of setting the further regulating function to the diode rectifier mode the vehicle's contribution to power oscillations on the AC-supply line 3 is reduced.

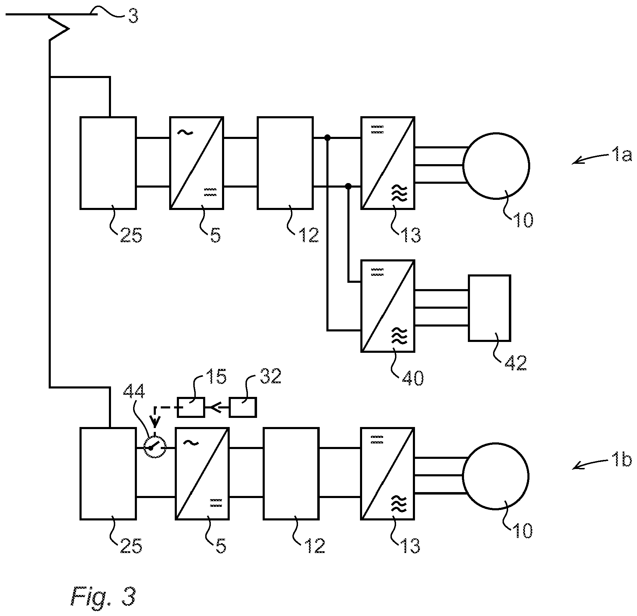

Figure 3 shows a vehicle comprising a drive unit 1a, and a further drive unit 1b. The drive unit 1a comprises in addition to the drive unit in fig. 1 and 2 an auxiliary converter 40 that is adapted to feed converted electric power to an internal power system 42 of the vehicle. The internal power system 42 comprises various components other than the electric motor 10, such as an air condition system, a heat system, a light system, etcetera. The auxiliary converter 40 is a DC/AC-converter similar to the motor converter 13 but arranged to convert power suitable for the internal power system 42. For the comfort of passengers of the vehicle, the internal power system 42 shall be provided with power both when the vehicle is in the operational and the non-operational mode.

The further drive 1b unit comprises an operational and a non-operational state and means for switching the further drive unit 1b between the operational and the non-operational state. In the disclosed embodiment the further drive unit 1b comprises an operation switch 44 that set the further drive unit 1b to the operational and non-operational state. The operation switch 44 is adapted to be controlled by the control unit 15 in dependency of information from the sensor 32 whether the vehicle is in the operational or the non-operational mode. The control unit 15 is adapted to set the further drive unit 1b to the operational state if the vehicle is in the operational mode and to the non-operational state if the vehicle is in the non-operational mode. Thereby, the operation of the further drive unit 1b is disabled when the vehicle is in the non-operational mode so that the vehicle's contribution to power oscillations on the AC-supply line 3 is reduced while the operation of the internal power system 42 of the vehicle is maintained.

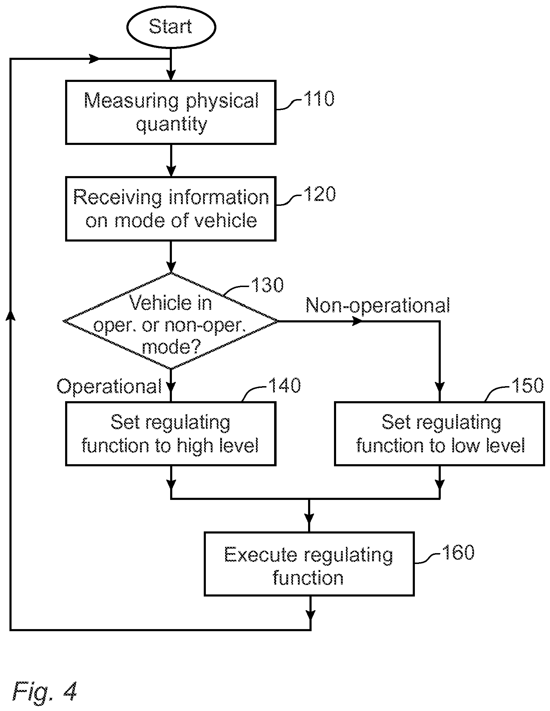

Figure 4 shows a flowchart of a method for controlling a drive unit 1 of a vehicle according to the first embodiment of the invention. The method is adapted to be executed continuously during the operation of the vehicle. Each step of the method can be executed by a computer program.

The method is initiated with a step 110 in which the measuring unit 17 measures at least one physical quantity of at least the AC-supply line 3. The measured physical quantity is to be used when executing the one or more regulating function.

In a step 120, information is received on whether the vehicle is in the operational or the non-operational mode. Subsequently, in a step 130, it is determined based on the received information if the vehicle is in the operational or the non-operational mode. If the vehicle is in the operational mode, in a step 140, the at least one regulating function is set to the high regulating level. If the vehicle is in the non-operational mode, in a step 150, the regulating function is set to the low regulating level. Thereafter, in a step 160, the regulating function is executed based on the measured physical quantity and the set regulating level.

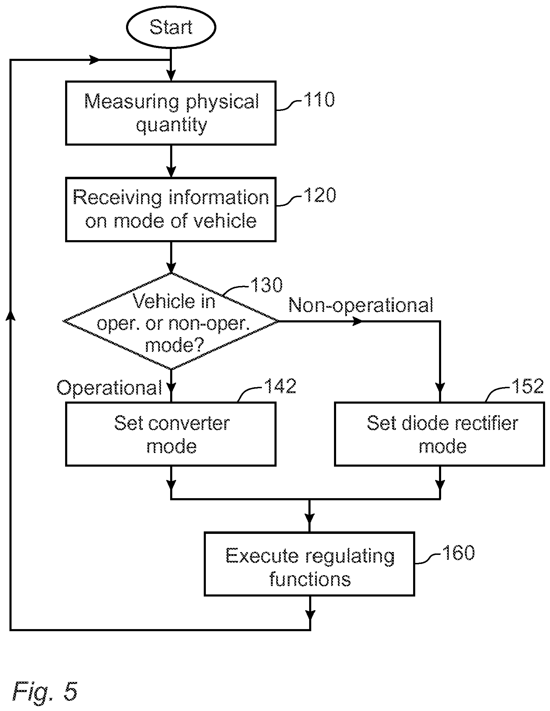

Figure 5 shows a flowchart of a method according to a second embodiment of the invention. The method in figure 5 differs from the method in figure 4 in that the regulating function is set to the high regulating level by means of setting the AC/DC-converter 7 to the converter mode in a step 142 and that the regulating function is set to the low regulating level by setting the regulating function to the diode rectifier mode in a step 152. The regulating level of the regulating function is dependent on which mode the AD/DC-converter is set to, wherein the converter mode results in that electric power is converted to the target value with the first accuracy and the diode rectifier mode results in that electric power is converted to the target value with the second accuracy. The first accuracy is higher that the second accuracy. Accordingly, the diode rectifier mode results in a lower degree of regulation in comparison to the converter mode, which in turn results in less power oscillations on the AC-supply line 3 in comparison to the converter mode.

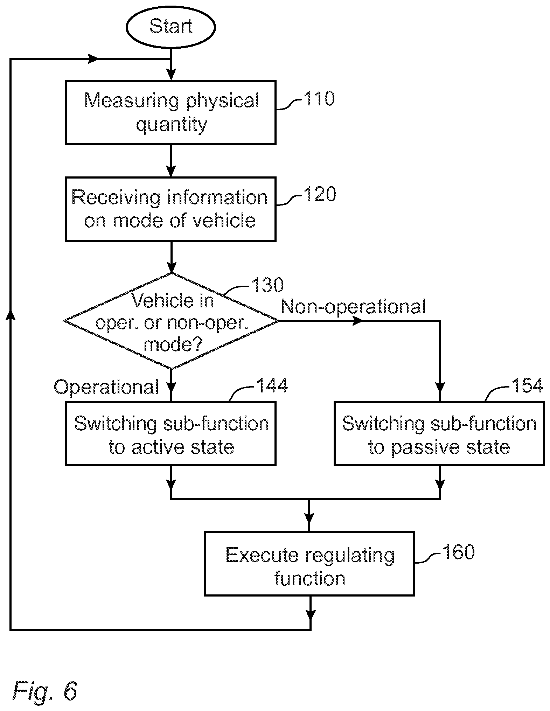

Figure 6 shows a flowchart of the method according to a third embodiment of the invention. The method in figure 6 differs from the method in figure 4 in that the at least one regulating function is, in a step 144, set to the high regulation level by means of switching at least a sub-function of the regulating function to an active state and that the regulating function is, in as step 154, set to the low regulating level by means of switching at least one sub-function of the regulating function to the passive state. The regulating function thus comprises two or more sub-function of which at least one sub-function comprises the active and the passive state. The regulating level of the regulating function is dependent of the number of active sub-functions. The high regulating level of a regulating function relates to a larger number of active sub-functions than the low regulating level. Accordingly, the lower number of active sub-functions results in lower degree of regulation, which in turn results in less power oscillations on the AC-supply line 3 in comparison to the higher number of active sub-functions.

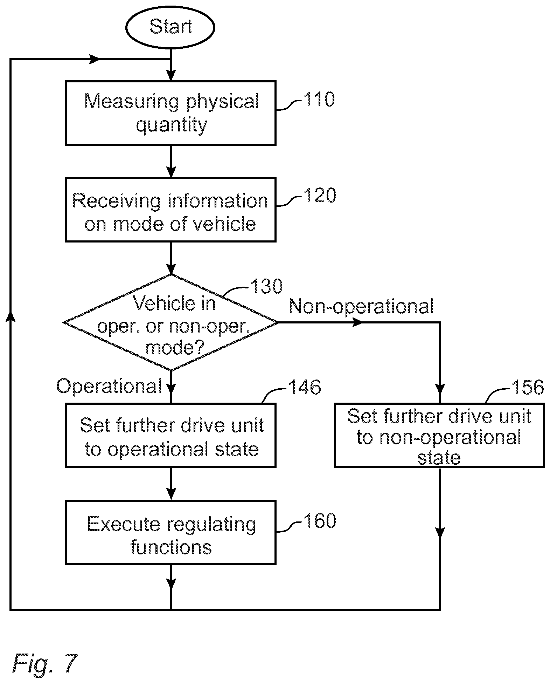

Figure 7 shows a flowchart of a method according to a forth embodiment of the invention. The method relates to a vehicle comprising a drive unit 1a adapted to provide electric power to at least one electric motor 10 and to an auxiliary converter 40 least one electric motor 10 and to an auxiliary converter 40 that provides power to an internal power system 42 of the vehicle, and which vehicle further comprises a further drive unit 1b adapted to provide power to only the at least one electric motor 10. The further drive unit 1b comprises an operational and a non-operational state. The methods in figure 7 differs from the method in figure 4 in that the operational state of the further drive unit 1b is dependent on whether the vehicle is in the operational or the non-operational mode. In a step 146, the further drive unit 1b is set to the operational state when the vehicle is in the operational mode. In a step 156, the further drive unit 1b is set to the non-operational state when the vehicle is in the non-operational mode.

By means of setting the further drive unit 1b to the non-operational state no regulating function of the control unit 15 of the further drive unit 1b is executed. The non-operational state relates to a lower degree of regulation of the AC/DC-converter 7 of the further drive unit 1b than in the operational state. Accordingly, the non-operational state of the further drive unit 1b results in less power oscillations on the AC-supply line 3 in comparison to the operational state.

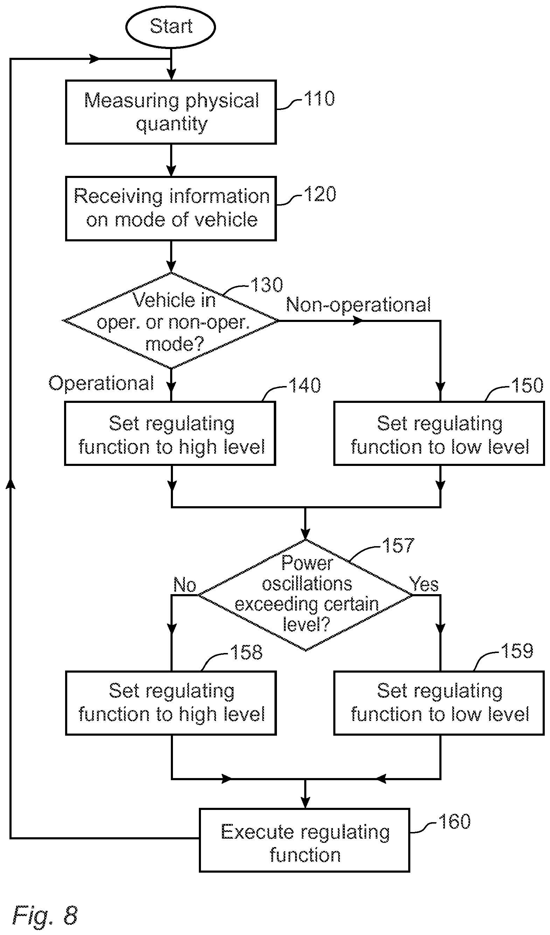

Figure 8 shows a flowchart of the method according to a fifth embodiment of the invention. The method in figure 8 differs from the method in figure 4 in that the method further comprises, in a step 157, determining whether the AC-supply line 3 comprises power oscillations exceeding a certain level. If the AC-supply line 3 comprises power oscillations less than the certain level, in a step 158, the at least one regulating function is set to the high regulating level. If the power oscillation exceeds the certain level, in a step 159, the regulating function is set to the low regulating level. Accordingly, the method involves regulating the regulating level of the regulating function during the vehicle is in the operational mode on bases if the power oscillations on the AC-supply line 3 exceed the certain value.

It shall be understood that the drive unit 1 is adapted to provide electric power to one or more electric motors 10. According to one embodiment of the invention, the first logic unit and the second logic unit is comprised by a single logic unit. According to one embodiment of the invention, the control unit 15 may control one or more AC/DC-converters 7.

In fig. 1 AC/DC-converter unit 5 comprises two control units 15, one for each switching arrangement 20. It shall be understood that a single control unit may be used for controlling the two switching arrangement 20.

## Claims

1. A method for controlling an drive unit (1, 1a, 1b) of a vehicle connected to an AC-supply line (3), the drive unit (1, 1a, 1b) comprises an AC/DC-converter (7) converting electric power to a target value between the AC-supply line (3) and at least one electric motor (10) of the vehicle, and a DC-link (12) transferring electric power between the AC/DC-converter (7) and the electric motor (10), and a control unit (15), the method comprises:
- measuring a physical quantity of at least the AC-supply line (3),
- controlling the AC/DC-converter (7) by executing at least one regulating function based on the measured physical quantity,
**characterized in that**:
said regulating function comprises a high regulating level converting electric power to the target value with a first accuracy and a low regulating level converting electric power to the target value with a second accuracy, the first accuracy being higher than the second accuracy, wherein the control unit (15) comprises a plurality of regulating functions comprising a first group comprising a high regulating level and a second group comprising a high regulating level and low regulating level,
wherein the method further comprises:
- receiving information on whether the vehicle is in an operational or a non-operational mode,
- setting the regulating function of the second group to the high regulating level if the vehicle is in the operational mode,
- setting the regulating function of the second group to the low regulating level if the vehicle is in the non-operational mode, and
- executing the regulating function based on the measured physical quantity and the set regulating level.

2. A method according to claim 1, wherein the regulating function comprises two or more sub-functions of which at least one sub-function comprises an active and a passive state, wherein the regulating level of the regulating function is dependent on the number of active sub-functions in that the high regulating level comprises a larger number of active sub-functions than the low regulating level, wherein the method comprises:
- setting the regulating function to the high regulating level comprising changing at least one of the sub-functions from the passive state to the active state if the vehicle is in the operational mode,
- setting the regulating function to the low regulating level comprising changing at least one of the sub-functions from the active state to the passive state if the vehicle is in the non-operational mode.

3. A method according to claim 2, wherein the regulating function is a proportional-integral controller comprising a proportional sub-function and integral sub-function, wherein the method further comprises:
- setting the regulating function to the high regulating level comprising changing the integral sub-function from the passive state to the active state if the vehicle is in the operational mode,
- setting the regulating function to the low regulating level comprising changing the integral sub-function from the active state to the passive state if the vehicle is in the non-operational mode.

4. A method according to any of the preceding claims, wherein the method further comprises:
- measuring at least one of a voltage and a current of the AC-supply line (3), a voltage of the DC-link (12) and a current of the AC/DC-converter (7).

5. A method according to any of the preceding claims, wherein the regulating function is predicting at least the fundamental frequency of the voltage of the AC-supply line (3).

6. A method according to any of the preceding claims, wherein the regulating function is controlling the power flow to and from the AC/DC-converter (7).

7. A method according to any of claim 5-6, wherein the regulating function is synchronizing the target of the conversion of power with a fundamental frequency of the voltage of the AC-supply line (3).

8. A method according to any of the preceding claims, wherein the drive unit (1, 1a, 1b) comprises a transformer unit (25) transforming the voltage from the AC-supply line (3) to the AC/DC-converter (7), which transformation is dependent on at least one of a fundamental frequency of the voltage of the AC-supply line (3) and a current of AC/DC-converter (7), wherein the regulating function is regulating the AC/DC-converter (7) based on a model of the transformer unit (25) with at least one of the fundamental frequency of the voltage of the AC-supply line (3) and the current of AC/DC-converter (7).

9. A method according to any of the preceding claims, wherein the method further comprises:
- determining whether the AC-supply line (3) comprises power oscillations exceeding a certain level, and
- setting the regulating function to a low regulating level if said power oscillations exceeds the certain level.

10. A method according to any of the preceding claims, wherein the high regulating level of the regulating function of the AC/CD-converter (7) comprises a converter mode providing conversion of electric power with the first accuracy and the low regulating level of the regulating function of the AC/CD-converter (7) comprises a diode rectifier mode providing conversion of electric power with the second accuracy, wherein the method comprises:
- setting the regulating function to the converter mode if the vehicle is in the operational mode,
- setting the regulating function to the diode rectifier mode if the vehicle is in the non-operational mode, and
- executing the regulating function based on the measured physical quantity and the set regulating level.

11. A method according to any of the preceding claims, wherein the drive unit (1a) comprises an auxiliary converter (40) being provided with electric power from the AC/DC-converter (7), and the vehicle comprises at least one further drive unit (1b) providing power to the electric motor (10), the further drive unit (1b) comprises an operational and a non-operational state, wherein the method further comprises:
- setting the further drive unit (1b) to the operational state if the vehicle is in the operational mode, and
- setting the further drive unit (1b) to the non-operational state if the vehicle is in the non-operational mode.

12. A drive unit (1, 1a, 1b) for a vehicle adapted to be connected to an AC-supply line (3), the drive unit (1, 1a, 1b) comprises an AC/DC-converter (7) adapted to convert electric power to a target value between the AC-supply line (3) and at least one electric motor (10) of the vehicle, a DC-link (12) adapted to transfer electric power between the AC/DC-converter (7) and the electric motor (10), and a control unit (15) comprising at least one regulating function, the control unit (15) is adapted to receive information on a physical quantity of at least the AC-supply line (3) and control the AC/DC-converter (7) by executing the regulating function on basis of said information on the physical quantity, **characterized in that** said regulating function comprises a high regulating level converting electric power to the target value with a first accuracy and a low regulating level converting electric power to the target value with a second accuracy, the first accuracy being higher than the second accuracy, wherein the control unit (15) is adapted to receive information on whether the vehicle is in is in an operational or a non-operational mode, wherein the control unit (15) comprises a plurality of regulating functions comprising a first group comprising a high regulating level and a second group comprising a high regulating level and low regulating level, and the control unit (15) is further adapted to switch the regulation function of the second group between the high and low regulating level so that the regulating function is set to the high regulating level when the vehicle is the operational mode and to the low regulating level when the vehicle is in the non-operational mode.

13. A drive unit (1, 1a, 1b) according to any of claim 12, wherein the AC/DC-converter (7) comprises an switching arrangement (20) of electric switches (22) that is adapted to be controlled by the control unit (15) so that electric power is converted to the target value, wherein the control unit (15) comprises means for generating control signals to the electric switches (22) of the switching arrangement (20).

14. An electric train, **characterized in that** the train comprises a drive unit (1, 1a, 1b) according to any of claim 12-13.

## Patentansprüche

1. Verfahren zur Ansteuerung einer Antriebseinheit (1, 1a, 1b) eines an eine Wechselstromversorgungsleitung (3) angeschlossenen Fahrzeugs, wobei die Antriebseinheit (1, 1a, 1b) einen Wechselstrom/Gleichstrom-Wandler (7) umfasst, der elektrische Energie auf einen Sollwert zwischen der Wechselstromversorgungsleitung (3) und mindestens einem Elektromotor (10) des Fahrzeugs wandelt, und einen Gleichstromzwischenkreis (12) umfasst, der elektrische Energie zwischen dem Wechselstrom/Gleichstrom-Wandler (7) und dem Elektromotor (10) überträgt, und eine Steuereinheit (15) umfasst, wobei das Verfahren umfasst:
- Messen einer physikalischen Größe von wenigstens der Wechselstromversorgungsleitung (3),
- Ansteuern des Wechselstrom/Gleichstrom-Wandlers (7) durch Ausführen wenigstens einer Regelungsfunktion basierend auf der gemessenen physikalische Größe,
**dadurch gekennzeichnet, dass**:
die Regelungsfunktion ein hohes Regelungslevel umfasst, das elektrische Energie mit einer ersten Genauigkeit auf den Sollwert umwandelt, und ein niedriges Regelungslevel umfasst, das elektrische Energie mit einer zweiten Genauigkeit auf den Sollwert umwandelt, wobei die erste Genauigkeit höher ist als die zweite Genauigkeit, wobei die Steuereinheit (15) eine Vielzahl von Regelungsfunktionen umfasst, die eine erste Gruppe umfassen, die ein hohes Regelungslevel umfasst, und die eine zweite Gruppe umfassen, die ein hohes Regelungslevel und ein niedriges Regelungslevel umfasst, wobei das Verfahren ferner umfasst:
- Empfangen von Informationen darüber, ob das Fahrzeug sich in einem Betriebsmodus oder in einem Nicht-Betriebsmodus befindet,
- Einstellen der Regelungsfunktion der zweiten Gruppe auf das hohe Regelungslevel, wenn sich das Fahrzeug in dem Betriebsmodus befindet,
- Einstellen der Regelungsfunktion der zweiten Gruppe auf das niedrige Regelungslevel, wenn sich das Fahrzeug in dem Nicht-Betriebsmodus befindet, und
- Ausführen der Regelungsfunktion basierend auf der gemessenen physikalischen Größe und dem eingestellten Regelungslevel.

2. Verfahren nach Anspruch 1, wobei die Regelungsfunktion zwei oder mehr Unterfunktionen umfasst, von denen wenigstens eine Unterfunktion einen aktiven und einen passiven Zustand umfasst, wobei das Regelungslevel der Regelungsfunktion von der Anzahl der aktiven Unterfunktionen abhängig ist, indem das hohe Regelungslevel eine höhere Anzahl an aktiven Unterfunktionen umfasst als das niedrige Regelungslevel, wobei das Verfahren umfasst:
- Einstellen der Regelungsfunktion auf das hohe Regelungslevel, umfassend das Ändern wenigstens einer der Unterfunktionen von dem passiven Zustand in den aktiven Zustand, wenn sich das Fahrzeug in dem Betriebsmodus befindet,
- Einstellen der Regelungsfunktion auf das niedrige Regelungslevel, umfassend das Ändern wenigstens einer der Unterfunktionen von dem aktiven Zustand in den passiven Zustand, wenn sich das Fahrzeug im Nicht- Betriebsmodus befindet.

3. Verfahren nach Anspruch 2, wobei die Regelungsfunktion eine Proportional-Integral-Steuerung ist, die eine Proportional-Unterfunktion und eine Integral-Unterfunktion umfasst, wobei das Verfahren ferner umfasst:
- Einstellen der Regelungsfunktion auf das hohe Regelungslevel, umfassend das Ändern der Integral-Unterfunktion von dem passiven Zustand in den aktiven Zustand, wenn sich das Fahrzeug in dem Betriebsmodus befindet,
- Einstellen der Regelungsfunktion auf das niedrige Regelungslevel, umfassend das Ändern der Integral-Unterfunktion von dem aktiven Zustand in den passiven Zustand, wenn sich das Fahrzeug in dem Nicht-Betriebsmodus befindet.

4. Verfahren nach einem der vorhergehenden Ansprüche, wobei das Verfahren ferner umfasst:
- Messen von wenigstens einem aus einer Spannung und einem Strom der Wechselstromversorgungsleitung (3), einer Spannung des Gleichstromzwischenkreises (12) und einem Strom des Wechselstrom/Gleichstrom-Wandlers (7).

5. Verfahren nach einem der vorhergehenden Ansprüche, wobei die Regelungsfunktion wenigstens die Grundfrequenz der Spannung der Wechselstromversorgungsleitung (3) vorhersagt.

6. Verfahren nach einem der vorhergehenden Ansprüche, wobei die Regelfunktion den Energiefluss zu und von dem Wechselstrom/Gleichstrom-Wandlers (7) steuert.

7. Verfahren nach einem der Ansprüche 5 bis 6, wobei die Regelungsfunktion das Ziel der Energieumwandlung mit einer Grundfrequenz der Spannung der Wechselstromversorgungsleitung (3) synchronisiert.

8. Verfahren nach einem der vorhergehenden Ansprüche, wobei die Antriebseinheit (1, 1a, 1b) eine Transformatoreinheit (25) umfasst, die die Spannung von der Wechselstromversorgungsleitung (3) zum Wechselstrom/Gleichstrom-Wandler (7) transformiert, wobei die Transformation von wenigstens einem aus einer Grundfrequenz der Spannung der Wechselstromversorgungsleitung (3) und einem Strom des Wechselstrom/Gleichstrom-Wandlers (7) abhängig ist, wobei die Regelungsfunktion den Wechselstrom/Gleichstrom-Wandler(7) basierend auf einem Modell der Transformatoreinheit (25) mit wenigstens einem aus der Grundfrequenz der Spannung der Wechselstromversorgungsleitung (3) und dem Strom des Wechselstrom/Gleichstrom-Wandlers (7) regelt.

9. Verfahren nach einem der vorhergehenden Ansprüche, wobei das Verfahren ferner umfasst:
- Bestimmen, ob die Wechselstromversorgungsleitung (3) Energieschwankungen aufweist, die ein vorbestimmtes Level überschreiten, und
- Einstellen der Regelfunktion auf ein niedriges Regelungslevel, wenn die Energieschwankungen das vorbestimmte Level überschreiten.

10. Verfahren nach einem der vorhergehenden Ansprüche, wobei das hohe Regelungslevel der Regelungsfunktion des Wechselstrom/Gleichstrom-Wandlers (7) einen Wandlermodus umfasst, der die Umwandlung elektrischer Energie mit der ersten Genauigkeit bereitstellt, und das niedrige Regelungslevel der Regelungsfunktion des Wechselstrom/Gleichstrom-Wandlers (7) einen Diodengleichrichtermodus umfasst, der die Umwandlung von elektrischer Energie mit der zweiten Genauigkeit bereitstellt, wobei das Verfahren umfasst:
- Einstellen der Regelfunktion auf den Wandlermodus, wenn sich das Fahrzeug in dem Betriebsmodus befindet,
- Einstellen der Regelungsfunktion auf den Diodengleichrichtermodus, wenn sich das Fahrzeug in dem Nicht-Betriebsmodus befindet, und
- Ausführen der Regelungsfunktion basierend auf der gemessenen physikalischen Größe und dem eingestellten Regelungslevel.

11. Verfahren nach einem der vorhergehenden Ansprüche, wobei die Antriebseinheit (1a) einen Hilfswandler (40) umfasst, der mit elektrischer Energie von dem Wechselstrom/Gleichstrom-Wandler (7) versorgt wird, und das Fahrzeug wenigstens eine weitere Antriebseinheit umfasst (1b), das Energie für den Elektromotor (10) bereitstellt, wobei die weitere Antriebseinheit (1b) einen Betriebszustand und einen Nicht-Betriebszustand umfasst, wobei das Verfahren ferner umfasst:
- Einstellen der weiteren Antriebseinheit (1b) in den Betriebszustand, wenn sich das Fahrzeug in dem Betriebsmodus befindet, und
- Einstellen der weiteren Antriebseinheit (1b) in den Nicht-Betriebszustand, wenn sich das Fahrzeug im Nicht-Betriebsmodus befindet.

12. Eine Antriebseinheit (1, 1a, 1b) für ein an eine Wechselstromversorgungsleitung (3) anschließbares Fahrzeug, wobei die Antriebseinheit (1, 1a, 1b) einen Wechselstrom/Gleichstrom-Wandler (7) umfasst, der dazu ausgebildet ist, elektrische Energie auf einen Sollwert zwischen der Wechselstromversorgungsleitung (3) und wenigstens einem Elektromotor (10) des Fahrzeugs zu wandeln, einen Gleichstromzwischenkreis (12), der dazu ausgebildet ist, elektrische Energie zwischen dem Wechselstrom/Gleichstrom-Wandler (7) und dem Elektromotor (10) zu übertragen, und eine Steuereinheit (15), die wenigstens eine Regelungsfunktion umfasst, wobei die Steuereinheit (15) dazu ausgebildet ist, Informationen über eine physikalische Größe von wenigstens der Wechselstromversorgungsleitung (3) zu empfangen und den Wechselstrom/Gleichstrom-Wandler (7) anzusteuern durch Ausführen der Regelungsfunktion basierend auf der Information über die physikalische Größe, **dadurch gekennzeichnet, dass** die Regelungsfunktion ein hohes Regelungslevel umfasst, das elektrische Energie mit einer ersten Genauigkeit in den Sollwert umwandelt, und ein niedriges Regelungslevel umfasst, das elektrische Energie mit einer zweiten Genauigkeit in den Sollwert umwandelt, wobei die erste Genauigkeit höher ist als die zweite Genauigkeit, wobei die Steuereinheit (15) dazu ausgebildet ist, Information darüber zu empfangen, ob das Fahrzeug sich in einem Betriebsmodus oder in einem Nicht-Betriebsmodus befindet, wobei die Steuereinheit (15) eine Vielzahl von Regelungsfunktionen umfasst, die eine erste Gruppe umfassen, die ein hohes Regelungslevel umfasst, und die eine zweite Gruppe umfassen, die ein hohes Regelungslevel und ein niedriges Regelungslevel umfasst, und wobei die Steuereinheit (15) ferner dazu ausgebildet ist, die Regelungsfunktion der zweiten Gruppe zwischen dem hohen Regelungslevel und dem niedrigen Regelungslevel umzuschalten, sodass die Regelungsfunktion auf das hohe Regelungslevel eingestellt ist, wenn sich das Fahrzeug in dem Betriebsmodus befindet und auf das niedrige Regelungslevel eingestellt ist, wenn sich das Fahrzeug in dem Nicht-Betriebsmodus befindet.

13. Antriebseinheit (1, 1a, 1b) nach Anspruch 12, wobei der Wechselstrom/Gleichstrom-Wandler (7) eine Schaltanordnung (20) von elektrischen Schaltern (22) umfasst, die dazu ausgebildet ist, von der Steuereinheit (15) angesteuert zu werden, sodass elektrische Energie auf den Sollwert gewandelt wird, wobei die Steuereinheit (15) Mittel zum Erzeugen von Steuersignalen zu den elektrischen Schaltern (22) der Schaltanordnung (20) umfasst.

14. Elektrischer Zug, **dadurch gekennzeichnet, dass** der Zug eine Antriebseinheit (1, 1a, 1b) nach einem der Ansprüche 12 bis 13 umfasst.

## Revendications

1. Procédé de commande d'une unité de transmission (1, 1a, 1b) d'un véhicule reliée à une ligne d'alimentation CA (3), l'unité de transmission (1, 1a, 1b) comprend un convertisseur CA/CC (7) convertissant une énergie électrique à une valeur cible entre la ligne d'alimentation CA (3) et au moins un moteur électrique (10) du véhicule, et une liaison CC (12) transférant une énergie électrique entre le convertisseur CA/CC (7) et le moteur électrique (10), et une unité de commande (15), le procédé comprend :
- la mesure d'une quantité physique d'au moins la ligne d'alimentation CA (3),
- la commande du convertisseur CA/CC (7) par l'exécution d'au moins une fonction de régulation sur la base de la quantité physique mesurée,
**caractérisé en ce que** :
ladite fonction de régulation comprend un haut niveau de régulation convertissant une énergie électrique à la valeur cible avec une première précision et un bas niveau de régulation convertissant une énergie électrique à la valeur cible avec une seconde précision, la première précision étant supérieure à la seconde précision, dans lequel l'unité de commande (15) comprend une pluralité de fonctions de régulation comprenant un premier groupe comprenant un haut niveau de régulation et un second groupe comprenant un haut niveau de régulation et un bas niveau de régulation,
dans lequel le procédé comprend en outre :
- la réception d'informations indiquant si le véhicule est dans un mode opérationnel ou dans un mode non opérationnel,
- le réglage de la fonction de régulation du second groupe au haut niveau de régulation si le véhicule est dans le mode opérationnel,
- le réglage de la fonction de régulation du second groupe au bas niveau de régulation si le véhicule est dans le mode non opérationnel, et
- l'exécution de la fonction de régulation sur la base de la quantité physique mesurée et du niveau de régulation réglé.

2. Procédé selon la revendication 1, dans lequel la fonction de régulation comprend au moins deux sous-fonctions, au moins l'une d'entre elles comprend un état actif et un état passif, dans lequel le niveau de régulation de la fonction de régulation dépend du nombre de sous-fonctions actives en ce que le haut niveau de régulation comprend un nombre de sous-fonctions actives supérieur à celui du bas niveau de régulation, dans lequel le procédé comprend :
- le réglage de la fonction de régulation au haut niveau de régulation comprenant le changement d'au moins l'une des sous-fonctions de l'état passif à l'état actif si le véhicule est dans le mode opérationnel,
- le réglage de la fonction de régulation au bas niveau de régulation comprenant le changement d'au moins l'une des sous-fonctions de l'état actif à l'état passif si le véhicule est dans le mode non opérationnel.

3. Procédé selon la revendication 2, dans lequel la fonction de régulation est un organe de commande proportionnelle-intégrale comprenant une sous-fonction proportionnelle et une sous-fonction intégrale, dans lequel le procédé comprend en outre :
- le réglage de la fonction de régulation au haut niveau de régulation comprenant le changement de la sous-fonction intégrale de l'état passif à l'état actif si le véhicule est dans le mode opérationnel,
- le réglage de la fonction de régulation au bas niveau de régulation comprenant le changement de la sous-fonction intégrale de l'état actif à l'état passif si le véhicule est dans le mode non opérationnel.

4. Procédé selon l'une quelconque des revendications précédentes, dans lequel le procédé comprend en outre :
- la mesure d'au moins l'une d'une tension et d'une intensité de la ligne d'alimentation CA (3), d'une tension de la liaison CC (12) et d'une intensité du convertisseur CA/CC (7).

5. Procédé selon l'une quelconque des revendications précédentes, dans lequel la fonction de régulation prédit au moins la fréquence fondamentale de la tension de la ligne d'alimentation CA (3).

6. Procédé selon l'une quelconque des revendications précédentes, dans lequel la fonction de régulation commande le flux d'énergie à destination et en provenance du convertisseur CA/CC (7).

7. Procédé selon l'une quelconque des revendications 5 et 6, dans lequel la fonction de régulation synchronise la cible de la conversion d'énergie avec une fréquence fondamentale de la tension de la ligne d'alimentation CA (3).

8. Procédé selon l'une quelconque des revendications précédentes, dans lequel l'unité de transmission (1, 1a, 1b) comprend une unité de transformateur (25) transformant la tension de la ligne d'alimentation CA (3) au convertisseur CA/CC (7), laquelle transformation dépend d'au moins l'une d'une fréquence fondamentale de la tension de la ligne d'alimentation CA (3) et d'une intensité du convertisseur CA/CC (7), dans lequel la fonction de régulation régule le convertisseur CA/CC (7) sur la base d'un modèle de l'unité de transformateur (25) avec au moins l'une de la fréquence fondamentale de la tension de la ligne d'alimentation CA (3) et de l'intensité du convertisseur CA/CC (7).

9. Procédé selon l'une quelconque des revendications précédentes, dans lequel le procédé comprend en outre :
- la détermination si la ligne d'alimentation CA (3) comprend des oscillations d'énergie dépassant un certain niveau, et
- le réglage de la fonction de régulation à un bas niveau de régulation si lesdites oscillations d'énergie dépassent le certain niveau.

10. Procédé selon l'une quelconque des revendications précédentes, dans lequel le haut niveau de régulation de la fonction de régulation du convertisseur CA/CC (7) comprend un mode de convertisseur fournissant une conversion d'énergie électrique avec la première précision et le bas niveau de régulation de la fonction de régulation du convertisseur CA/CC (7) comprend un mode de redresseur à diode fournissant une conversion d'énergie électrique avec la seconde précision, dans lequel le procédé comprend :
- le réglage de la fonction de régulation au mode de convertisseur si le véhicule est dans le mode opérationnel,
- le réglage de la fonction de régulation au mode de redresseur à diode si le véhicule est dans le mode non opérationnel, et
- l'exécution de la fonction de régulation sur la base de la quantité physique mesurée et du niveau de régulation réglé.

11. Procédé selon l'une quelconque des revendications précédentes, dans lequel l'unité de transmission (la) comprend un convertisseur auxiliaire (40) alimenté en énergie électrique depuis le convertisseur CA/CC (7), et le véhicule comprend au moins une autre unité de transmission (1b) alimentant le moteur électrique (10) en énergie, l'autre unité de transmission (1b) comprend un état opérationnel et un état non opérationnel, dans lequel le procédé comprend en outre :
- le réglage de l'autre unité de transmission (1b) à l'état opérationnel si le véhicule est dans le mode opérationnel, et
- le réglage de l'autre unité de transmission (1b) à l'état non opérationnel si le véhicule est dans le mode non opérationnel.

12. Unité de transmission (1, 1a, 1b) d'un véhicule apte à être reliée à une ligne d'alimentation CA (3), l'unité de transmission (1, 1a, 1b) comprend un convertisseur CA/CC (7) apte à convertir une énergie électrique à une valeur cible entre la ligne d'alimentation CA (3) et au moins un moteur électrique (10) du véhicule, une liaison CC (12) apte à transférer une énergie électrique entre le convertisseur CA/CC (7) et le moteur électrique (10), et une unité de commande (15) comprenant au moins une fonction de régulation, l'unité de commande (15) étant apte à recevoir des informations relatives à une quantité physique d'au moins la ligne d'alimentation CA (3) et à commander le convertisseur CA/CC (7) par l'exécution de la fonction de régulation sur la base desdites informations relatives à la quantité physique, **caractérisée en ce que** ladite fonction de régulation comprend un haut niveau de régulation convertissant une énergie électrique à la valeur cible avec une première précision et un bas niveau de régulation convertissant une énergie électrique à la valeur cible avec une seconde précision, la première précision étant supérieure à la seconde précision, dans lequel l'unité de commande (15) est apte à recevoir des informations indiquant si le véhicule est dans un mode opérationnel ou dans un mode non opérationnel, dans lequel l'unité de commande (15) comprend une pluralité de fonctions de régulation comprenant un premier groupe comprenant un haut niveau de régulation et un second groupe comprenant un haut niveau de régulation et un bas niveau de régulation, et l'unité de commande (15) est en outre apte à commuter la fonction de régulation du second groupe entre le haut niveau de régulation et le bas niveau de régulation de sorte que la fonction de régulation soit réglée au haut niveau de régulation lorsque le véhicule est dans le mode opérationnel et au bas niveau de régulation lorsque le véhicule est dans le mode non opérationnel.

13. Unité de transmission (1, 1a, 1b) selon la revendication 12, dans laquelle le convertisseur CA/CC (7) comprend un agencement de commutation (20) de commutateurs électriques (22) qui est apte à être commandé par l'unité de commande (15) de sorte qu'une énergie électrique soit convertie à la valeur cible, dans laquelle l'unité de commande (15) comprend des moyens de génération de signaux de commande aux commutateurs électriques (22) de l'agencement de commutation (20).

14. Groupe motopropulseur électrique, **caractérisé en ce que** le groupe motopropulseur comprend une unité de transmission (1, 1a, 1b) selon l'une quelconque des revendications 12 et 13.
